# FASCICULE DE BREVET EUROPEEN

(11) **EP 3 210 869 B1**
(45) Date de publication et mention de la délivrance du brevet: **05.12.2018**
(21) Numéro de dépôt: 17157769.5
(22) Date de dépôt: 24.02.2017
(51) Int. Cl.: B62K 3/06, B62K 3/10, B62K 19/06, B62K 3/00, B62K 25/04

(54) **CYCLE A CADRE SOUPLE**
FAHRRAD MIT FLEXIBLEM RAHMEN
FLEXIBLE FRAME CYCLE

(30) Priorité: 26.02.2016 FR 1670063
(43) Date de publication de la demande: 30.08.2017
(73) Titulaire: Yvoz, Jean-Pascal, 54540 Pexonne (FR)
(72) Inventeur: Yvoz, Jean-Pascal, 54540 Pexonne (FR)
(74) Mandataire: Hege, Frédéric

(56) Documents cités:
- EP-A1- 1 580 105
- WO-A2-2008/022352
- AU-A4- 2003 100 913
- CN-Y- 2 233 358
- DE-A1- 1 680 582
- DE-U1- 9 315 373
- DE-U1- 20 114 983
- FR-A- 731 386

## Description

La présente invention se situe dans le domaine des cycles. Un cycle est défini comme un véhicule ayant au moins deux roues et propulsé exclusivement par l'énergie musculaire des personnes se trouvant sur ce véhicule. Un cycle à pédalage assisté est un cycle équipé d'un moteur auxiliaire électrique.

Dans le cadre de la présente demande, on appellera cycle un tel véhicule, qu'il soit à pédalage assisté ou non.

Un cycle comporte habituellement une roue avant reliée, libre en rotation autour de son axe, à une fourche avant, elle même reliée à un guidon, ladite fourche avant et ledit guidon étant reliés de façon libre en rotation à un tube de direction. Le guidon et la fourche peuvent être mécaniquement solidaires, ou encore être reliés par une courroie ou une chaine de sorte que la rotation du guidon entraine une rotation correspondante de la fourche. Le cycle comporte également une roue arrière reliée libre en rotation autour de son axe à une fourche arrière. Un cadre relie ladite fourche arrière et ledit tube de direction et permet à l'ensemble de former un véhicule.

La fourche avant ou arrière peut parfois être remplacée par un bras latéral unique. Ce cas de figure est considéré comme inclus dans la présente invention.

Même si dans la suite on se limitera à citer la fourche, une fourche devra être comprise dans le cadre de la présente invention comme pouvant alternativement être un bras latéral de maintien d'une roue.

Un cadre de cycle se compose habituellement d'un tube horizontal, d'un tube diagonal, et d'un tube de selle presque vertical, légèrement incliné vers l'arrière.

Ces trois tubes sont soudés l'un à l'autre, et forment un triangle ; on dit que le cadre est triangulé. La disposition des trois tubes peut varier. Elle est notamment différente pour un vélo homme ou femme (le tube « horizontal » est également incliné pour faciliter le passage du pied pour monter sur le vélo ; même pour un vélo homme il est parfois un peu incliné). Elle est aussi différente pour une trottinette pour laquelle les tubes horizontal et diagonal sont repoussés vers l'avant et inclinés tous les deux pour laisser la place à une plateforme pour l'appui des pieds.

Pour certains cadres la triangulation est remplacée par une plaque, par exemple en bois, ou encore par un profilé large qui remplace les deux tubes horizontal et diagonal, assurant la tenue et la rigidité du cadre, et soudé à un tube de selle.

La fourche arrière est généralement fixée au cadre de manière rigide également à l'aide d'un hauban, formant là encore une triangulation. Quand il n'y a pas de hauban, la fourche est alors réalisée massive, pour donner de la tenue, mais en même temps on donne de la rigidité.

Lors de la conception d'un cycle, un des points importants est d'assurer le confort du cycliste. Dans ce but, et pour des usages du cycle sur des revêtements qui ne sont pas lisses, ou hors des routes goudronnées, il est possible de doter la fourche avant et/ou la fourche arrière, voire la selle, d'amortisseurs. Toutefois l'introduction d'amortisseurs complexifie la conception, et augmente le coût et le poids total de la bicyclette.

Le document CN 2 233 358 Y divulgue un cycle selon le préambule de la revendication 1 et constitue l'état de la technique le plus proche de l'objet de la revendication 8..

La présente invention a pour objet de pallier au moins en partie à ces inconvénients. A cet effet, elle propose, dans la revendication indépendante 1, un cycle à pédalage assisté ou non, comprenant un cadre, une roue avant reliée, libre en rotation autour de son axe, à une fourche avant elle-même reliée à un guidon, ladite fourche avant et ledit guidon étant reliés de façon libre en rotation à un tube de direction, et une roue arrière reliée libre en rotation autour de son axe à une fourche arrière, dans lequel ledit cadre est constitué essentiellement d'un seul tube plié, fixé à son extrémité avant au tube de direction et sur lequel le bras ou la fourche arrière est fixée.

Grâce à ces dispositions, le poids total du cycle est réduit et la souplesse est plus importante qu'avec un cadre triangulé de l'état de la technique, le confort du cycliste est donc amélioré.

Selon l'invention, ledit tube plié comporte au moins un coude souple, défini par le fait que le moment quadratique au niveau du coude souple est plus faible qu'au niveau des parties droites dudit tube plié ; ceci afin d'améliorer encore la flexibilité du cadre au niveau de ses coudes et ainsi la souplesse du cadre et le confort du cycliste.

Selon d'autres caractéristiques:
- ledit tube plié peut être carré ou rectangulaire, et ledit coude souple peut être un coude dit américain, dans lequel les faces du tube perpendiculaires au plan du coude sont enfoncées au niveau du coude, de sorte à donner à la section du tube une forme en H ; ainsi les soudures du cadre aux différents éléments du cycle sont simplifiées et ce type de réalisation des coudes par cintrage dit américain permet de conserver une épaisseur de peau satisfaisante même à partir de tubes plus fins,
- ledit tube plié peut comporter un coude souple comme coude avant et un coude souple comme coude arrière disposés proches du bas dudit cycle et espacés entre eux, de sorte à former une partie rectiligne du tube, sensiblement horizontale et proche du sol, facilitant ainsi pour le cycliste le passage du pied au moment d'enfourcher le cycle,
- ledit cycle peut comporter un coude de direction souple, proche de l'extrémité avant du tube, de sorte à permettre une partie de tube coudé fortement inclinée vers le bas tout en échappant la roue avant, ceci permettant de faciliter la fixation par soudure du tube de direction au cadre,
- ledit tube plié peut former un tube de selle au-delà dudit coude arrière, et ledit cycle peut comporter un pédalier fixé au cadre au dessus dudit coude arrière au niveau dudit tube de selle, ainsi la fixation du pédalier au cadre ne rend pas le coude arrière sensiblement plus rigide,
- ladite fourche arrière, ou chacun des deux bras de ladite fourche arrière, peut être maintenue par ledit cadre uniquement par l'extrémité de ladite fourche arrière ou de chacun de deux bras de ladite fourche arrière, de sorte à former un maintien souple de la roue arrière par rapport au cadre, ainsi la souplesse du cycle est encore améliorée,
- l'extrémité de ladite fourche arrière ou de chacun de deux bras de ladite fourche arrière est fixée audit cadre au niveau d'une partie rectiligne dudit tube plié, ainsi la fixation de la fourche arrière au cadre ne rend pas le coude arrière sensiblement plus rigide,

La présente invention concerne aussi un procédé de fabrication d'un cadre de cycle, selon la revendication indépendante 8, comportant les étapes suivantes:
- Coupe d'un tube métallique à section carrée ou rectangulaire, à une longueur prédéfinie pour le cadre,
- Cintrage du tube métallique pour former le cadre, sans triangulation,
- Fixation, notamment par soudure, de divers éléments au cadre, en particulier le tube de direction et la fourche arrière,

Grâce à ces dispositions, la fabrication d'un cadre de cycle est facilitée, et produit un cadre de cycle souple et léger.

Selon d'autres caractéristiques :
- l'étape de cintrage du tube métallique pour former le cadre comprend une étape de déformation du tube par enfoncement d'un outil dans ses deux faces opposées perpendiculaires au plan du coude de sorte à donner à la section du profil une forme en H, puis une étape de cintrage à froid, ce type de cintrage permettant de conserver une épaisseur de peau satisfaisante à partir de tubes plus fins.

La présente invention sera mieux comprise à la lecture de la description détaillée qui fait suite, en référence aux figures annexées dans lesquelles :
- La figure 1 est une vue de côté d'un cycle selon l'invention, sous la forme d'une bicyclette.
- La figure 2 est une vue en coupe d'un tube au niveau d'un coude du cadre du cycle de la fig. 1.
- La figure 3 est une vue de côté d'un cycle selon un deuxième mode de réalisation, sous la forme d'une trottinette.

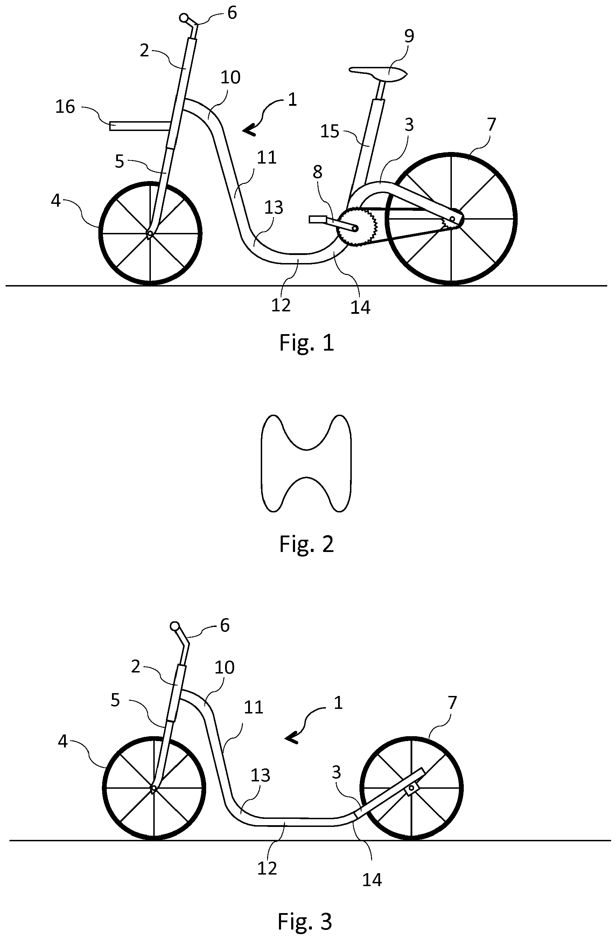

Dans un premier mode de réalisation, l'invention concerne une bicyclette, représentée en fig. 1, et comprenant un cadre 1, un tube de direction 2 et une fourche arrière 3.

La bicyclette selon l'invention comprend encore une roue avant 4, fixée à une fourche avant 5 et dirigée par un guidon 6 selon le fonctionnement d'une bicyclette classique, et une roue arrière 7 fixée à la fourche arrière 3. Un pédalier 8 permet d'entraîner la roue arrière 7 par l'intermédiaire d'un plateau, d'une chaîne et d'un pignon, selon le fonctionnement d'une bicyclette classique.

Le cadre 1 est constitué d'un seul tube métallique plié, dont une extrémité est soudée au tube de direction 2 et l'autre extrémité constitue un tube de selle, et peut accueillir la tige d'une selle 9. Le cadre 1 offre ainsi une souplesse plus importante qu'un cadre triangulé de l'état de la technique, ou qu'une tige de selle soudée à une pièce avant massive. Il est ainsi possible d'offrir un confort pour le cycliste supérieur au confort offert par une bicyclette classique sans amortisseur. Le cadre 1, étant composé d'un tube unique, est également plus léger qu'un cadre classique, ce qui a un impact important sur le poids total de la bicyclette et donc sur les efforts demandés au cycliste.

Le cadre 1 comporte avantageusement un coude de direction 10 permettant une soudure sensiblement perpendiculaire au tube de direction 2 puis une descente rapide formant diagonale 11 pour obtenir un entre-jambes 12 particulièrement bas. Il comporte un coude avant 13, permettant un entre-jambes 12 sensiblement horizontal. De cette façon l'entre-jambes est particulièrement bas sur une longueur significative, par exemple 300 mm. Le cadre comporte enfin un coude arrière 14 permettant d'obtenir une partie remontante formant tube de selle 15. L'entre-jambes 12 peut servir de plateforme pour un pied, de sorte que le vélo peut aussi être utilisé comme une trottinette par exemple pour une circulation en zone piétonne encombrée, ou si le dispositif de propulsion est défaillant.

Le pédalier 8 peut être fixé sur une partie droite du cadre 1, pour éviter de rigidifier le coude arrière 14, sur lequel le pédalier est habituellement fixé. En effet en soudant le pédalier 8 au niveau du coude arrière 14, celui-ci devient massif, et perd ses qualités de souplesse.

La fourche arrière 3 peut être constituée de deux bras en forme de tubes pliés, par exemple des tubes ovales ou oblongs, avec comme exemple de dimensions, 2cm de large et 4cm de haut, permettant là encore d'apporter une grande souplesse. Contrairement à l'état de la technique la fourche arrière 3 n'est pas maintenue par un hauban, et n'est pas massive. Les deux tubes sont soudés exclusivement au niveau de leur extrémité au tube de selle 15. On cherche là aussi à éviter la soudure au niveau du coude arrière, pour ne pas rigidifier celui-ci.

Selon un autre mode de réalisation non représenté, la fourche arrière 3 peut aussi être constituée d'un seul bras latéral, maintenant la roue arrière 7.

La fourche avant 5 peut aussi être constituée de deux tubes ovales ou oblongs. Dans un mode particulier de réalisation, la fourche avant peut être constituée de deux tels tubes reliant la roue directement au guidon, et d'un axe cylindrique apte à recevoir le tube de direction, ledit axe étant fixé sur une traverse reliant les deux tubes ovales ou oblongs.

La fourche arrière 3 est, selon le mode de réalisation représenté à la fig. 1, soudé au cadre 1 au-dessus du pédalier 8. Ceci présente l'avantage de faciliter le démontage de la chaine ; il suffit en effet de démonter la roue arrière 7, et la chaine peut s'enlever sans l'ouvrir. Ceci présente un avantage particulier pour l'utilisation d'une courroie, qu'on ne peut pas ouvrir. La bicyclette selon ce mode de réalisation de l'invention peut donc recevoir une courroie pour transmettre l'effort du pédalier 8 à la roue arrière 7.

Dans un deuxième mode de réalisation, l'invention concerne une trottinette représentée en fig. 3 et comprenant un cadre 1, un tube de direction 2 et une fourche arrière 3.

La trottinette selon l'invention comprend encore une roue avant 4, fixée à une fourche avant 5 et dirigée par un guidon 6 selon le fonctionnement d'une trottinette classique, et une roue arrière 7 fixée à une fourche arrière 3.

Le cadre 1 de la trottinette de la fig. 3 est similaire au cadre 1 de la bicyclette de la fig. 1 en ce qu'il se compose d'un tube unique comportant un coude de direction 10, une diagonale 11, un coude avant 13, un entre-jambes 12 formant plateforme pour supporter les pieds de l'utilisateur, et un coude arrière 14. Il n'y a pas de tube de selle 15, puisque ce cycle n'a pas de selle 9. Il y a néanmoins une partie droite suivant le coude arrière 14, à laquelle est fixée une fourche arrière 3. Sa section présente également une forme carrée ou rectangulaire. Les avantages mentionnés plus haut en termes de simplicité de fabrication et souplesse d'utilisation sont donc semblables à ceux de la bicyclette selon l'invention.

Le tube formant le cadre 1 peut présenter une section carrée, par exemple de 4cm de côté et être ainsi plus facile à produire et à souder aux autres parties du cycle, la forme de la section de soudure étant simple, soit carrée, soit rectangulaire.

Le tube peut aussi être rectangulaire, avec une longueur légèrement supérieur à la largeur, par exemple une hauteur de 6cm pour une largeur de 4cm.

Dans les coudes 10, 13, 14 du cadre 1, le tube carré peut être cintré selon la méthode du coude américain, c'est-à-dire en donnant à sa section une forme de H, comme représenté en fig. 2.

Le procédé de cintrage se passe de la manière suivante :
- On sélectionne un profil de tube carré ou légèrement rectangulaire
- On le coupe à une longueur prédéfinie
- On le plie, par exemple selon l'une des formes indiquées aux Fig. 1 et 3 donnant une diagonale 11, un entre-jambes 12 et un tube de selle 15, en variante fig. 3 une extrémité de cadre 1 apte à recevoir la fourche arrière 3, séparés par des coudes 13 et 14.

Les coudes 10, 13, 14 peuvent se faire de préférence par un cintrage dit « américain », dans lequel on commence par enfoncer les deux parois perpendiculaires au plan du coude, dans les exemples des fig. les plans supérieur et inférieur du tube carré ou rectangulaire, avant de procéder au cintrage, de préférence à froid. Un tel procédé permet de maitriser la déformation du tube pendant le cintrage, et d'éviter une déchirure de la peau externe au coude jusqu'à des épaisseurs plus fines qu'avec d'autres méthodes de cintrage. Par ailleurs le moment quadratique du tube est réduit du fait de la forme en poignard au niveau des coudes, typiquement de 20% ou même de 50%, créant ainsi des coudes souples, ce qui confère au tube une bonne flexibilité au niveau des coudes 10, 13, 14.

Dans un mode préféré de réalisation de l'invention, le rayon de la roue avant 4 est inférieur au rayon de la roue arrière 7, ils peuvent par exemple mesurer respectivement 20 pouces et 26 pouces. La roue avant de 20 pouces peut être équipée d'un moteur électrique.

Les pneus utilisés pour les roues 4, 7, peuvent être des pneus ballons d'épaisseur 55 à 60 mm. Ce type de pneu permet de rouler sur toute sorte de route ou de chemin et offre plus de souplesse, notamment du fait de la pression réduite, à 2 ou 2,5 bars. L'avantage du pneu ballon est également de se déformer différemment des pneus étroits, de sorte à réduire les frottements de roulement.

Le cadre 1 peut être réalisé en acier, présentant ainsi une souplesse plus importante qu'un cadre aluminium. Le poids plus important de l'acier est compensé par la forme particulière du cadre à un seul tube. L'acier choisi peut être de l'acier E220, ou pour des performances plus importantes en termes de poids et/ou de résistance de l'acier 15CDV6.

Le cycle selon l'invention peut comporter un support avant 16, par exemple fixé sur le tube de direction. Ce support avant peut être utilisé pour transporter une charge comme un panier. Dans le cas d'un cycle de location électrique, il peut également accueillir un connecteur pour le verrouillage et la recharge, et transmettre une information permettant à un système central de localiser la bicyclette.

Le cycle selon l'invention peut comporter une charnière au niveau de la diagonale 11 ou de l'entrejambe 12. Ceci permet de plier le cycle pour son rangement, ou pour un transport.

L'invention peut également concerner un tricycle classique, comportant deux roues arrières et une roue avant, ou un tricycle dit « trike », comportant une roue arrière et deux roues avant. Ces deux applications demandent une adaptation du cadre 1 à la portée de l'homme du métier, tout en restant dans la portée de la présente invention, avec un cadre formé d'un tube unique plié.

L'avantage du cycle selon l'invention est d'abord sa souplesse, permettant d'obtenir, sans mise en place d'amortisseurs, un confort équivalent aux cycles de l'état de la technique avec amortisseurs. Cette souplesse permet également en cas de choc frontal, d'absorber une partie de l'énergie du choc par un pliage du cadre, permettant ainsi de réduire l'effet du choc sur le cycliste lui-même.

Enfin la simplicité de la construction - un seul tube pour le cadre, pas d'amortisseur, permet d'obtenir un cycle peu onéreux, et raisonnablement léger, malgré l'utilisation préférée de l'acier.

## Revendications

1. Cycle, à pédalage assisté ou non, comprenant un cadre (1), une roue avant (4) reliée, libre en rotation autour de son axe, à une fourche avant (5) elle-même reliée à un guidon (6), ladite fourche avant (5) et ledit guidon (6) étant reliés de façon libre en rotation à un tube de direction (2), et une roue arrière (7) reliée libre en rotation autour de son axe à une fourche arrière (3), dans lequel ledit cadre (1) est constitué essentiellement d'un seul tube plié, fixé à son extrémité avant au tube de direction (2) et sur lequel la fourche arrière (3) est fixée, **caractérisé en ce que** ledit tube plié (1) comporte au moins un coud7e souple (10, 13, 14), défini par le fait que le moment quadratique au niveau du coude souple (10, 13, 14) est plus faible qu'au niveau des parties droites dudit tube plié.

2. Cycle selon la revendication précédente, dans lequel ledit tube plié (1) est à section carrée ou rectangulaire, et ledit coude souple (10, 13, 14) est un coude dit américain, dans lequel les faces du tube perpendiculaires au plan du coude (10, 13, 14) sont enfoncées au niveau du coude (10, 13, 14), de sorte à donner à la section du tube une forme en H.

3. Cycle selon l'une des revendications précédentes, dans lequel ledit tube plié (1) comporte un coude souple comme coude avant (13) et un coude souple comme coude arrière (14) disposés proches du bas dudit cycle et espacés entre eux, de sorte à former un entre-jambes (12), sensiblement horizontal et proche du sol.

4. Cycle selon la revendication précédente, comportant un coude de direction (10) souple, proche de l'extrémité avant du tube plié (1), de sorte à permettre une partie de tube coudé fortement inclinée vers le bas (11) tout en échappant la roue avant (4).

5. Cycle selon l'une des revendications 3 ou 4, dans lequel ledit tube plié (1) forme un tube de selle au-delà dudit coude arrière (14), et ledit cycle comporte un pédalier (8) fixé au tube plié (1) au dessus dudit coude arrière (14) au niveau dudit tube de selle.

6. Cycle selon l'une des revendications précédentes, dans lequel ladite fourche arrière (3), ou chacun de deux bras de ladite fourche arrière (3), est maintenu(e) par ledit tube plié (1) uniquement par l'extrémité de ladite fourche arrière (3) ou de chacun des deux bras de ladite fourche arrière (3), de sorte à former un maintien souple de la roue arrière (7) par rapport au tube plié (1).

7. Cycle selon la revendication précédente, dans lequel l'extrémité de ladite fourche arrière (3) ou de chacun des deux bras de ladite fourche arrière (3) est fixée audit tube plié (1) au niveau d'une partie rectiligne dudit tube plié (1).

8. Procédé de fabrication d'un cadre de cycle (1), comportant les étapes suivantes :
- Coupe d'un tube métallique à section carrée ou rectangulaire, à une longueur prédéfinie pour le cadre (1),
- Cintrage du tube métallique pour former le cadre (1), sans triangulation, ledit cadre (1) comportant au moins un coude souple (10, 13, 14), défini par le fait que le moment quadratique au niveau du coude souple (10, 13, 14) est plus faible qu'au niveau des parties droites dudit tube plié par cintrage,
- Fixation, notamment par soudure, de divers éléments au cadre (1), en particulier un tube de direction (2) et une fourche arrière (3).

9. Procédé de fabrication selon la revendication précédente, dans lequel l'étape de cintrage du tube métallique pour former le cadre (1) comprend une étape de déformation du tube par enfoncement d'un outil dans ses deux faces opposées perpendiculaires au plan du coude de sorte à donner à la section du profil une forme en H, puis une étape de cintrage à froid.

## Patentansprüche

1. Fahrrad, mit oder ohne Tretunterstützung, umfassend einen Rahmen (1), ein Vorderrad (4), das frei drehbar um seine Achse mit einer Vordergabel (5) verbunden ist, die selbst mit einem Lenker (6) verbunden ist, wobei die Vordergabel (5) und der Lenker (6) frei drehbar mit einem Steuerrohr (2) verbunden sind, und ein Hinterrad (7), das frei drehbar um seine Achse mit einer Hintergabel (3) verbunden ist, wobei der Rahmen (1) im Wesentlichen aus einem einzigen gebogenen Rohr besteht, das an seinem vorderen Ende am Steuerrohr (2) befestigt ist und an dem die hintere Gabel (3) befestigt ist, **dadurch gekennzeichnet, dass** das gebogene Rohr (1) mindestens eine flexible Biegung (10, 13, 14) aufweist, die dadurch definiert ist, dass das quadratische Moment an der flexiblen Biegung (10, 13, 14) geringer ist als an den geraden Abschnitten des gebogenen Rohres.

2. Fahrrad nach dem vorstehenden Anspruch, wobei das gebogene Rohr (1) einen quadratischen oder rechteckigen Querschnitt aufweist und die flexible Biegung (10, 13, 14) eine sogenannte amerikanische Biegung ist, wobei die Flächen des Rohres senkrecht zur Ebene der Biegung (10, 13, 14) an der Biegung (10, 13, 14) eingeschoben werden, um dem Rohrquerschnitt eine H-Form zu verleihen.

3. Fahrrad nach einem der vorstehenden Ansprüche, wobei das gebogene Rohr (1) eine flexible Biegung als vordere Biegung (13) und eine flexible Biegung als hintere Biegung (14) aufweist, die nahe dem Boden des Fahrrads angeordnet und voneinander beabstandet sind, um einen im Wesentlichen horizontalen und bodennahen Schritt (12) zu bilden.

4. Fahrrad nach dem vorstehenden Anspruch, umfassend eine flexible Lenkbiegung (10) in der Nähe des vorderen Endes des gebogenen Rohres (1), so dass ein Abschnitt des gebogenen Rohres stark nach unten geneigt (11) sein kann, ohne an das Vorderrad (4) zu stossen.

5. Fahrrad nach einem der Ansprüche 3 oder 4, wobei das gebogene Rohr (1) ein Sitzrohr jenseits der hinteren Biegung (14) bildet und das Fahrrad eine Pedalkonstruktion (8) beinhaltet, die an dem gebogenen Rohr (1) oberhalb der hinteren Biegung (14) an dem Sitzrohr befestigt ist.

6. Fahrrad nach einem der vorstehenden Ansprüche, wobei die Hinterradgabel (3) oder jeder der beiden Arme der Hinterradgabel (3) nur durch das gebogene Rohr (1) am Ende der Hinterradgabel (3) oder an jedem der beiden Arme der Hinterradgabel (3) gehalten wird, um eine flexible Halterung des Hinterrades (7) in Bezug auf das gebogene Rohr (1) zu bilden.

7. Fahrrad nach dem vorstehenden Anspruch, wobei das Ende der hinteren Gabel (3) oder jeder der beiden Arme der hinteren Gabel (3) an dem gebogenen Rohr (1) an einem geraden Abschnitt des gebogenen Rohres (1) befestigt ist.

8. Verfahren zur Herstellung eines Fahrradrahmens (1), umfassend die folgenden Schritte:
- Schneiden eines Metallrohres mit quadratischem oder rechteckigem Querschnitt auf eine vorgegebene Länge für den Rahmen (1),
- Biegen des Metallrohres zum Bilden des Rahmens (1) ohne Triangulation, wobei der Rahmen (1) mindestens eine flexible Biegung (10, 13, 14) umfasst, die dadurch definiert ist, dass das quadratische Moment an der flexiblen Biegung (10, 13, 14) niedriger ist als an den geraden Abschnitte des durch Biegen gebogenen Rohres,
- Befestigung, insbesondere durch Schweißen, verschiedener Elemente am Rahmen (1), insbesondere eines Steuerrohrs (2) und einer Hinterradgabel (3).

9. Herstellungsverfahren nach dem vorstehenden Anspruch, wobei der Schritt des Biegens des Metallrohrs zum Bilden des Rahmens (1) einen Schritt des Verformens des Rohres durch Eintreiben eines Werkzeugs in seine beiden gegenüberliegenden Flächen senkrecht zur Ebene der Biegung umfasst, um dem Profilabschnitt eine H-förmige Form zu verleihen, und dann einen Schritt des Kaltbiegens.

## Claims

1. Cycle, with or without assisted pedalling, comprising a frame (1), a front wheel (4) connected, free in rotation about its axis, to a front fork (5) itself connected to a handlebar (6), said front fork (5) and said handlebar (6) being connected in a freely rotatable manner to a head tube (2), and a rear wheel (7) connected free in rotation about its axis to a rear fork (3), wherein said frame (1) consists essentially of a single bent tube, fixed at its front end to the head tube (2) and to which the rear fork (3) is fixed, **characterized in that** said bent tube (1) comprises at least one flexible bend (10, 13, 14), defined by the fact that the second moment of area at the flexible bend (10, 13, 14) is lower than at the straight portions of said bent tube.

2. Cycle according to the previous claim, wherein said bent tube (1) is of square or rectangular cross-section, and said flexible bend (10, 13, 14) is a so-called american bend, wherein the faces of the tube perpendicular to the plane of the bend (10, 13, 14) are pushed in at the bend (10, 13, 14), so as to give the tube an H-shape cross-section.

3. Cycle according to one of the previous claims, wherein said bent tube (1) comprises a flexible bend as a front bend (13) and a flexible bend as a rear bend (14), both of them arranged near the bottom of said cycle and spaced apart from each other, so as to form a substantially horizontal and near-ground between-legs portion (12).

4. Cycle according to the previous claim, comprising a flexible steering bend (10), close to the front end of the bent tube (1), so as to allow a portion of the bent tube to be strongly inclined downward (11) while escaping the front wheel (4).

5. Cycle according to one of the claims 3 or 4, wherein said bent tube (1) forms a seat tube beyond said rear bend (14), and said cycle comprises a crankset (8) attached to the bent tube (1) above said rear bend (14) at the level of said seat tube.

6. Cycle according to one of the previous claims, wherein said rear fork (3), or each of two arms of said rear fork (3), is held by said bent tube (1) only by the end of said rear fork (3) or each of the two arms of said rear fork (3), so as to form a flexible holding of the rear wheel (7) relative to the bent tube (1).

7. Cycle according to the previous claim, wherein the end of said rear fork (3) or each of the two arms of said rear fork (3) is attached to said bent tube (1) at a straight portion of said bent tube (1).

8. Manufacturing method of a cycle frame (1), comprising the following steps:
- Cutting of a square or rectangular cross-section metal tube, to a predefined length for the frame (1),
- Bending of the metal tube to form the frame (1), without triangulation, said frame (1) comprising at least one flexible bend (10, 13, 14), defined by the fact that the second moment of area at the flexible bend (10, 13, 14) is lower than at the level of the straight portions of said tube bent by bending,
- Fixing, in particular by welding, of various elements to the frame (1), in particular a head tube (2) and a rear fork (3).

9. Manufacturing method according to the previous claim, wherein the step of bending the metal tube to form the frame (1) comprises a step of deforming the tube by pushing a tool into its two opposite faces perpendicular to the plane of the bend so as to give the section of the profile an H-shaped form, and then a step of cold bending.
